# EUROPEAN PATENT SPECIFICATION

(11) **EP 4 513 648 B1**
(45) Date of publication and mention of the grant of the patent: **25.02.2026**
(21) Application number: 25150889.1
(22) Date of filing: 23.08.2021
(51) Int. Cl.: H01M 50/20, H01M 10/6551, H01M 10/647, H01M 50/502, H01M 10/04, H01M 50/242, H01M 50/211, H01M 50/224, H01M 50/293, H01M 50/264

(54) **BATTERY PACK WITH INCREASED LIFESPAN OF BATTERY CELL AND DEVICE INCLUDING THE SAME**
BATTERIEPACK MIT ERHÖHTER LEBENSDAUER EINER BATTERIEZELLE UND VORRICHTUNG DAMIT
BLOC-BATTERIE À DURÉE DE VIE ACCRUE D'ÉLÉMENT DE BATTERIE ET DISPOSITIF LE COMPRENANT

(30) Priority: 22.09.2020 KR 20200121927
(43) Date of publication of application: 26.02.2025
(62) Divisional of application: 21872730.3
(73) Proprietor: LG Energy Solution, Ltd., Seoul 07335 (KR)
(72) Inventor: LEE, Jung Hoon, 34122 DAEJEON (KR); YANG, JAE HUN, 34122 DAEJEON (KR); JEONG, Sang Yoon, 34122 DAEJEON (KR); HA, Jong Soo, 34122 DAEJEON (KR); KIM, Se Ho, 34122 DAEJEON (KR)
(74) Representative: Plasseraud IP

(56) References cited:
- EP-B1- 3 039 731
- CN-A- 106 329 030
- DE-A1- 102010 012 930
- JP-A- 2007 173 030
- JP-A- 2019 125 455

## Description

### [Technical Field]

This application claims the benefit of priority to Korean Patent Application No. 2020-0121927 filed on September 22, 2020.

The present invention relates to a battery pack and a device including the same, and more particularly to a battery pack with increased lifespan of a battery cell configured to have a structure in which pressure applied to the battery cell is maintained at an appropriate level, whereby lifespan of the battery cell is extended, and the battery cell is in surface contact with a heat sink, whereby rapid heat dissipation is achieved, and a device including the same.

### [Background Art]

With recent development of alternative energies due to air pollution and energy depletion caused as the result of use of fossil fuels, demand for secondary batteries capable of storing electrical energy that is produced has increased. The secondary batteries, which are being capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

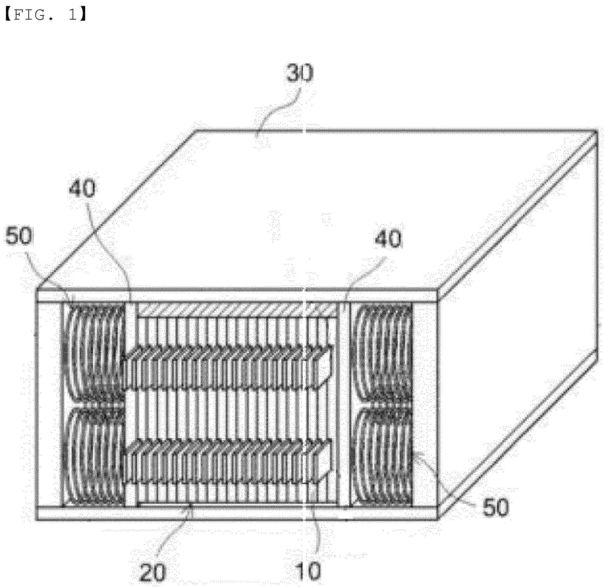

Meanwhile, a battery cell swells during repeated charging and discharging thereof, whereby the overall volume of the battery cell is increased. In order to increase lifespan of the battery cell, however, electrical contact between an electrode and an active material must be improved. To this end, it is necessary to constantly apply a predetermined level of pressing force to the battery cell. FIG. 1 is a perspective view showing the structure of a conventional battery module as disclosed in JP 2019-125455 A. As shown in FIG. 1, the conventional battery module includes a plurality of single cells 10 disposed perpendicular to a heat sink 20, a case 30 configured to wrap the plurality of single cells 10 in order to protect the plurality of single cells, pressing plates 40 located at opposite sides of the plurality of single cells 10 vertically disposed, and pressure adjustment members 50 located between the pressing plates 40 and the case 30.

The conventional battery module is configured to have a structure in which the pressure adjustment members 50, which are elastic members, are located between the case 30 and the pressing plates 40 in order to press the opposite sides of the single cells 10, whereby an increase in volume of the single cells at the time of swelling is inhibited.

In the conventional battery module, however, only pressing is performed and no pressure adjustment function is provided. As a result, it is not possible to increase lifespan of the battery cells.

DE 10 2010 012 930 A1 discloses a battery for an electrically propelled car with a plurality of battery cells, which has clamping devices designed as tie rods which comprise elastic springs in stacking direction, and plates between neighbouring stacks of battery cells at their respective ends.

JP 2019 125455 A discloses a battery pack as shown in Fig. 1 of the present application.

EP 3 039 731 B1 discloses a portable electrical energy storage device with thermal runaway mitigation. It comprises a barrier that functions as a thermal insulator and a thermal barrier to the propagation of cell failure, e.g. due to thermal energy.

CN 106 329 030 A discloses a cooling plate which comprises a heat-conducting plate and a cooling pipe.

### [Disclosure]

### [Technical Problem]

The present invention has been made in view of the above problems.

It is an object of the present invention to provide a battery pack capable of inhibiting occurrence of a secondary problem due to heat generation by efficiently removing heat generated from a battery cell and a device including the same.

It is a further object of the present invention to provide a battery pack capable of reducing battery cell cooling deviation by increasing adhesion force and a device including the same.

### [Technical Solution]

In order to accomplish the above objects, a battery pack according to the present invention includes a plurality of battery modules (1000) stacked in a vertical direction in a horizontal state; pressing plates (2100) including an upper pressing plate (2110) and a lower pressing plate (2120) located outside the plurality of battery modules (1000); a first (2210) and a second elastic member (2220) configured to connect the upper pressing plate (2110) and the lower pressing plate (2120) to each other with a tensile force; and a pack case (2300) configured to wrap the pressing plate (2100), wherein the pack case (2300) includes an upper pack cover (2310) and a lower pack cover (2320), and a third elastic member (2230) is provided between the upper pack cover (2310) and the upper pressing plate (2110), wherein each of the battery modules (1000) includes a heat sink (100) which is a flat plate provided with a flow channel defined therein and having a predetermined area, the heat sink being horizontally located; a support plate (200) including an upper support plate (210) and a lower support plate (220) located respectively at the upper surface and the lower surface of the heat sink (100); battery cells (500) including first battery cells (510) disposed in tight contact with the upper support plate (210) and second battery cells (520) disposed in tight contact with the lower support plate (220); and cover plates (600) including an upper cover plate (610) located above the first battery cells (510) and a lower cover plate (620) located under the second battery cells (520).

Also, in the battery pack according to the present invention, the heat sink (100) may be provided on the upper surface thereof with protuberances (110) protruding by a predetermined height, and the upper support plate (210) may be provided with first openings (211) configured to receive the protuberances (110).

Also, in the battery pack according to the present invention, the first battery cells (510) may be located at the upper surface of the protuberances (110).

Also, in the battery pack according to the present invention, the heat sink (100) may be provided on the lower surface thereof with protuberances (110) protruding by a predetermined height, and the lower support plate (220) may be provided with second openings (221) configured to receive the protuberances (110).

Also, in the battery pack according to the present invention, the second battery cells (520) may be located at the lower surface of the protuberances (110).

Also, in the battery pack according to the present invention, first support frames (410) may be located between the upper support plate (210) and the upper cover plate (610) so as to extend along opposite edges and the middle thereof while having a predetermined height and width.

Also, in the battery pack according to the present invention, second support frames (420) may be located between the lower support plate (220) and the lower cover plate (620) so as to extend along opposite edges and the middle thereof while having a predetermined height and width.

Also, in the battery pack according to the present invention, the first support frame (410) and the second support frame (420) extending along the middle of each of the upper support plate and the upper cover plate or the middle of each of the lower support plate and the lower cover plate may be provided respectively with first through-holes (411) and second through-holes (421) configured to allow first elastic members (2210) to be inserted therethrough.

Also, in the battery pack according to the present invention, a first busbar assembly (310) may be located between the upper support plate (210) and the upper cover plate (610), and the first busbar assembly (310) may include a first busbar frame (311) having a first receiving recess (311(a)) formed therein and a busbar (312) seated in the first receiving recess (311(a)), the busbar being configured to have a concave-convex structure that is bent at a predetermined angle a plurality of times.

Also, in the battery pack according to the present invention, a second busbar assembly (320) may be located between the lower support plate (220) and the lower cover plate (620).

In addition, the present invention provides a device including the battery pack.

### [Advantageous Effects]

The battery pack with increased lifespan of the battery cell according to the present invention and the device including the same have a merit in that relatively wide side surfaces of the battery cells and a heat sink are in tight contact with each other in a state of being located in a horizontal direction, whereby cooling performance of the battery cells is improved due to an increase in heat transfer area.

Furthermore, the battery pack with increased lifespan of the battery cell according to the present invention and the device including the same have an advantage in that the battery cells, the heat sink, a support plate, etc. are fastened to each other via a plurality of support frames and fastening members, whereby it is possible to maintain uniform adhesion force between the battery cells and the heat sink while maximizing space utilization.

### [Description of Drawings]

FIG. 1 is a perspective view of a conventional battery module.
FIG. 2 is a perspective view of a battery pack according to a preferred embodiment of the present invention.
FIG. 3 is an exploded perspective view of the battery pack shown in FIG. 2.
FIG. 4 is a sectional view taken along line A-A' of FIG. 2.
FIG. 5 is an exploded perspective view of a battery module according to a preferred embodiment of the present invention.
FIG. 6 is a perspective view illustrating a coupling structure between a heat sink and a support plate in the battery module according to the preferred embodiment of the present invention.
FIG. 7 is a perspective view illustrating a battery cell mounting structure in the battery module according to the preferred embodiment of the present invention.
FIG. 8 is a perspective view illustrating a support frame disposition structure in the battery module according to the preferred embodiment of the present invention.
FIG. 9 is a perspective view illustrating a coupling structure between battery cells and busbars in the battery module according to the preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack with increased lifespan of a battery cell according to the present invention will be described with reference to the accompanying drawings.

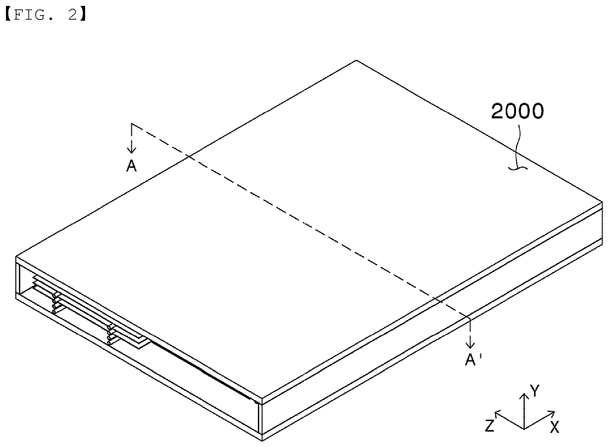

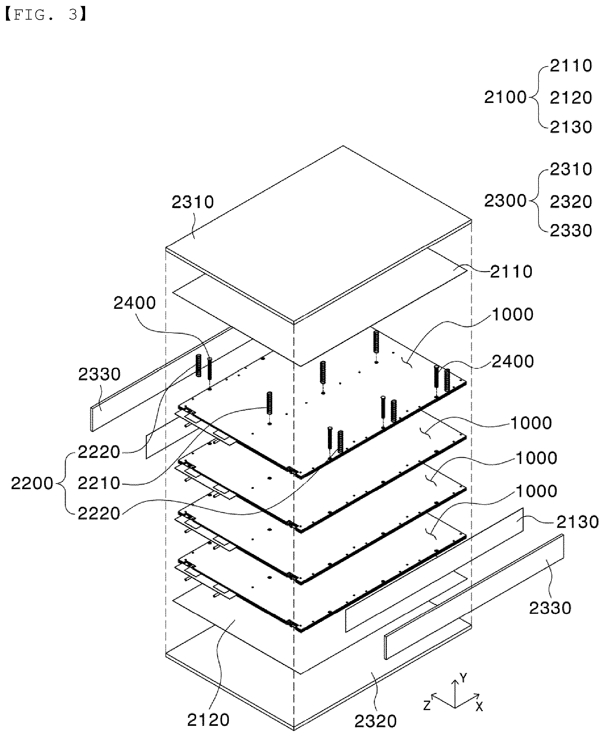

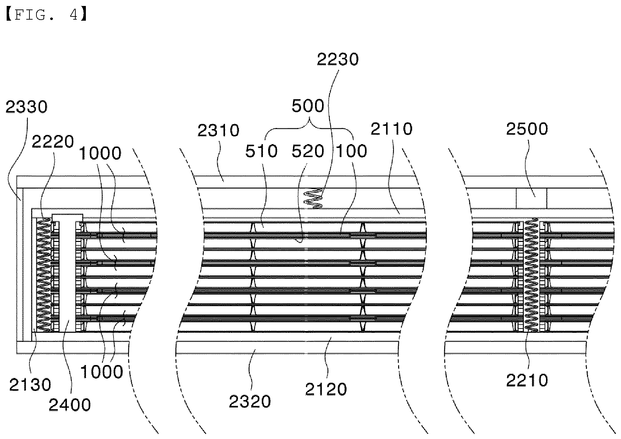

FIG. 2 is a perspective view of a battery pack according to a preferred embodiment of the present invention, FIG. 3 is an exploded perspective view of the battery pack shown in FIG. 2, and FIG. 4 is a sectional view taken along line A-A' of FIG. 2.

As shown in FIGS. 2 to 4, the battery pack 2000 according to the present invention includes a plurality of horizontally stacked battery modules 1000, a pressing plate 2100 located at the upper surface and the lower surface of the plurality of stacked battery modules 1000, an elastic member 2200, a pack case 2300, a plurality of fastening members 2400 configured to fix the battery modules 1000, and a distance retention portion 2500.

First, the pressing plate 2100 includes an upper pressing plate 2110 located on the upper surface of the stacked battery modules 1000 in tight contact therewith, a lower pressing plate 2120 located on the lower surface of the stacked battery modules 1000 in tight contact therewith, and a plurality of side plates 2130 located at opposite side surfaces of the battery modules 1000 in a state of being spaced apart therefrom by a predetermined distance.

The elastic member 2200 includes a first elastic member 2210, a second elastic member 2220, and a third elastic member 2230. One side of each of a plurality of first elastic members 2210, which are inserted perpendicularly through middle parts of the battery modules 1000, is connected to the upper pressing plate 2110, and the other side of each of the first elastic members is connected to the lower pressing plate 2120. Since middle parts of the upper pressing plate 2110 and the lower pressing plate 2120 are pulled, therefore, it is possible to constantly press battery cells 500 located at the middle parts of the battery modules 1000 within a predetermined range irrespective of swelling.

The second elastic member 2220, which connects the upper pressing plate 2110 and the lower pressing plate 2120, specifically the edge of the upper pressing plate 2110 and the edge of the lower pressing plate 2120, to each other, constantly presses battery cells 500 located at edges of the battery modules 1000 within a predetermined range.

The first elastic member 2210 and the second elastic member 2220 provide tensile force between the upper pressing plate 2110 and the lower pressing plate 2120, whereas the third elastic member 2230 is located between the upper pressing plate 2110 and an upper pack cover 2310 to provide pressing force. In particular, it is preferable for the third elastic member 2230 to be provided in plural in a state of being spaced apart from each other by a predetermined distance. The third elastic member inhibits bending of the pressing plate that may be caused by a swelling deviation between the battery cells, whereby it is possible to minimize a deviation in pressing force.

Here, each of the first elastic member 2210, the second elastic member 2220, and the third elastic member 2230 may be a coil. However, the present invention is not limited thereto.

The pack case 2300 includes an upper pack cover 2310 located at the upper surface of the upper pressing plate 2110, a lower pack cover 2320 located at the lower surface of the lower pressing plate 2120, and side pack covers 2330 located parallel to the side plates 2130.

The fastening members 2400 are configured to fix the plurality of battery modules 1000, which are stacked in a vertical direction, using predetermined force. As an example, each of the fastening members may be a bolt having a screw thread formed at one end thereof, and a nut may be fastened to the other side of the fastening member in order to fix the battery modules 1000.

Of course, it is preferable for the nuts to be somewhat loosely fastened to the fastening members in consideration of expansion of the battery modules upon swelling.

Meanwhile, the distance retention portion 2500 may be further provided between the upper pressing plate 2110 and the upper pack cover 2310 at the middle thereof in order to supplement tensile force by the first elastic member 2210 and pressing force by the third elastic member 2230. The distance retention portion may be a quadrangular pillar made of metal.

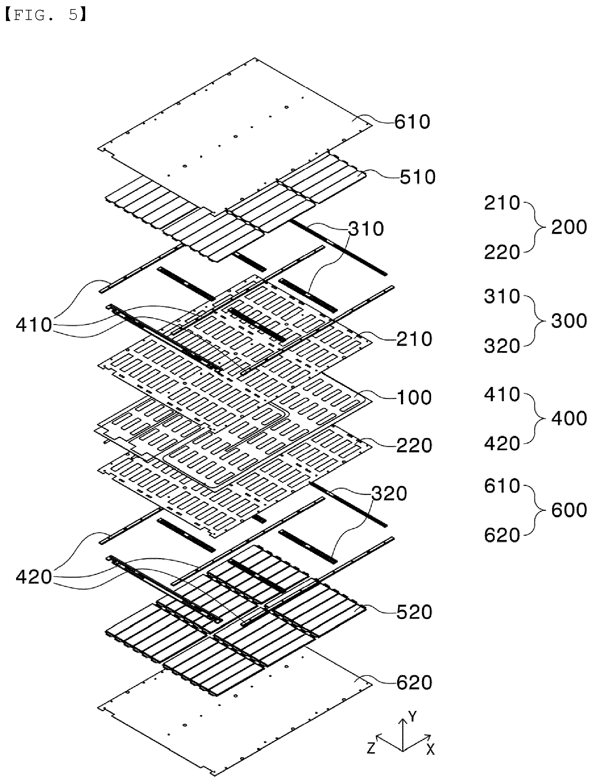

FIG. 5 is an exploded perspective view of a battery module according to a preferred embodiment of the present invention. As shown in FIG. 5, the battery module 1000 includes a heat sink 100, a support plate 200, a busbar assembly 300, a support frame 400, battery cells 500, and a cover plate 600.

First, the heat sink 100 is a flat plate that is provided with a flow channel defined therein and has a predetermined area. A plurality of protuberances 110 is formed on the upper surface and the lower surface of the heat sink 100 so as to protrude therefrom in a state of being spaced apart from each other by a predetermined distance. The protuberances 110 will be described below in detail.

The support plate 200 includes an upper support plate 210 and a lower support plate 220 located at opposite surfaces of the heat sink 100, more specifically the upper surface of the heat sink 100 and the lower surface of the heat sink 100, respectively.

The busbar assembly 300 configured to electrically connect the battery cells 500 to each other includes a first busbar assembly 310 and a second busbar assembly 320. The first busbar assembly 310 is located at the upper surface of the upper support plate 210, and the second busbar assembly 320 is disposed at the lower surface of the lower support plate 220.

A total of six first busbar assemblies 310, one of which is located in the vicinity of each of opposite edges of the upper support plate 210 and four of which are located between the two first busbar assemblies located in the vicinity of the opposite edges of the upper support plate in a state of being spaced apart from each other by a predetermined distance in a longitudinal direction (an X-axis direction), are shown in the figure, which, however, is merely an example. The number or position of first busbar assemblies may be changed as long as the first busbar assemblies can be brought into tight contact with the upper support plate 210.

The second busbar assemblies 320 are symmetrical with the first busbar assemblies 310, and therefore an additional description thereof will be omitted.

Next, the support frame 400 includes first support frames 410 and second support frames 420. The first support frames 410 are located between the upper support plate 210 and an upper cover plate 610, and the second support frames 420 are located between the lower support plate 220 and the lower cover plate 620. The first support frames and the second support frames will be described below in more detail.

The battery cells 500 include a plurality of first battery cells 510 and a plurality of second battery cells 520 located parallel to the heat sink 100. Specifically, the first battery cells 510 are located between the upper support plate 210 and the upper cover plate 610, and the second battery cells 520 are located between the lower support plate 220 and the lower cover plate 620.

The first battery cells 510 and the second battery cells 520 may be battery cells having the same construction. For example, each battery cell may include a cell case, in which an electrode assembly (not shown) is received, and a pair of electrode leads.

Here, the electrode assembly may be a jelly-roll type assembly, which is configured to have a structure in which a long sheet type positive electrode and a long sheet type negative electrode are wound in the state in which a separator is interposed therebetween, a stacked type assembly which is configured to have a structure in which a rectangular positive electrode and a rectangular negative electrode are stacked in the state in which a separator is interposed therebetween, a stacked and folded type assembly, which is configured to have a structure in which unit cells are wound using a long separation film, or a laminated and stacked type assembly, which is configured to have a structure in which battery cells are stacked in the state in which a separator is interposed therebetween and are then attached to each other. However, the present invention is not limited thereto. It is preferable for the electrode assembly according to the present invention to be a stacked and folded type assembly or a laminated and stacked type assembly, which has lowest physical stress when a curved module is formed.

The electrode assembly is received in the cell case. The cell case is generally configured to have a laminate sheet structure including an inner layer, a metal layer, and an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the cell case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical-physical properties, such as tensile strength, rigidity, surface hardness, and impact strength resistance, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is light and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate. However, the present invention is not limited thereto.

Meanwhile, the pair of electrode leads is constituted by a positive electrode lead and a negative electrode lead, which may be exposed from the cell case in a state of being electrically connected respectively to positive electrode tabs and negative electrode tabs of the electrode assembly or may be directly connected to the electrode assembly in the state in which tabs are omitted.

Next, the cover plate 600 serves to protect the battery cells 500 from the outside, and includes an upper cover plate 610 and a lower cover plate 620.

Specifically, the upper cover plate 610 is located above the first battery cells 510 to protect the upper surfaces of the first battery cells 510, and the lower cover plate 620 is located above the second battery cells 520 to protect the lower surfaces of the second battery cells 520.

Each of the upper cover plate 610 and the lower cover plate 620 is provided with a plurality of through-holes formed so as to be spaced apart from each other by a predetermined distance such that the first elastic members 2210 and the fastening members 2400 are inserted therethrough.

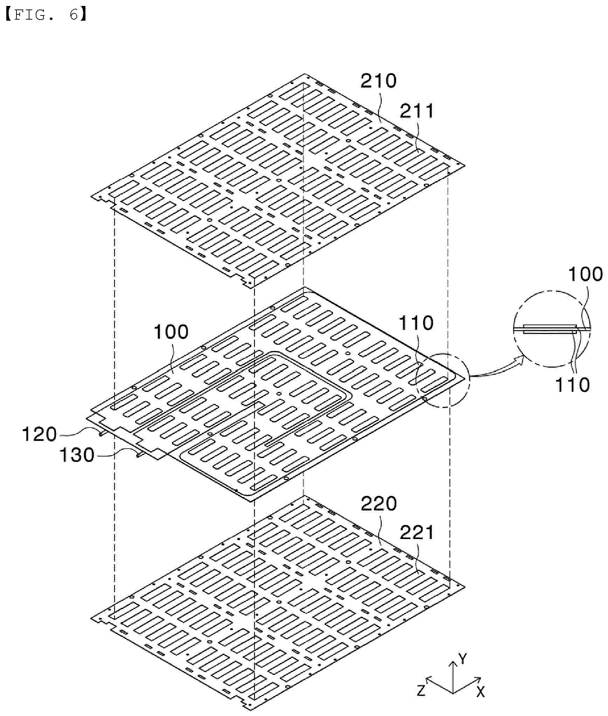

FIG. 6 is a perspective view illustrating a coupling structure between the heat sink and the support plate in the battery module according to the preferred embodiment of the present invention.

Referring to FIG. 6, the upper support plate 210 is located at the upper surface of the heat sink 100 according to the present invention, and the lower support plate 220 is located at the lower surface of the heat sink 100.

Meanwhile, it is preferable for the protuberances 110 to be formed on the opposite surfaces of the heat sink 100, i.e. the upper surface and the lower surface of the heat sink, so as to protrude therefrom by a predetermined height while having a predetermined shape. It is more preferable for the upper support plate 210 to have first openings 211 configured to receive the protuberances 110 formed on the upper surface of the heat sink 100 and for the lower support plate 220 to have second openings 221 configured to receive the protuberances 110 formed on the lower surface of the heat sink 100.

When the upper support plate 210 and the lower support plate 220 are brought respectively into tight contact with the upper surface and the lower surface of the heat sink 100 having the protuberances 110 formed on the opposite surfaces thereof, the protuberances 110 formed on the upper surface of the heat sink 100 are inserted into the first openings 211, and the protuberances 110 formed on the lower surface of the heat sink 100 are inserted into the second openings 221, whereby rolling of the heat sink from side to side may be prevented.

Here, each of the upper support plate 210 and the lower support plate 220 may be made of a thermally conductive resin.

Meanwhile, a coolant inlet port 120 configured to supply a coolant is provided at one side of the heat sink 100, and a coolant outlet port 130 configured to discharge the coolant that has performed heat exchange is provided in the vicinity of the coolant inlet port. It is obvious that the coolant inlet port 120 and the coolant outlet port 130 are not necessarily located so as to be adjacent to each other as long as it is possible to supply and discharge the coolant.

Meanwhile, the heat sink 100, the upper support plate 210, and the lower support plate 220 are provided with through-holes, through which the first elastic members 2210 and the fastening members 2400 are inserted.

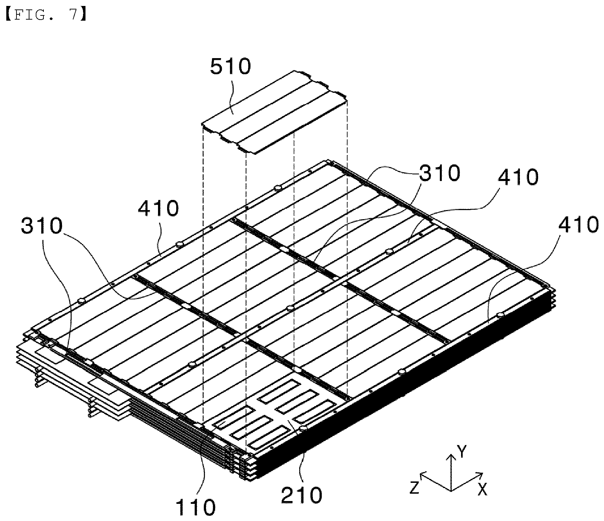

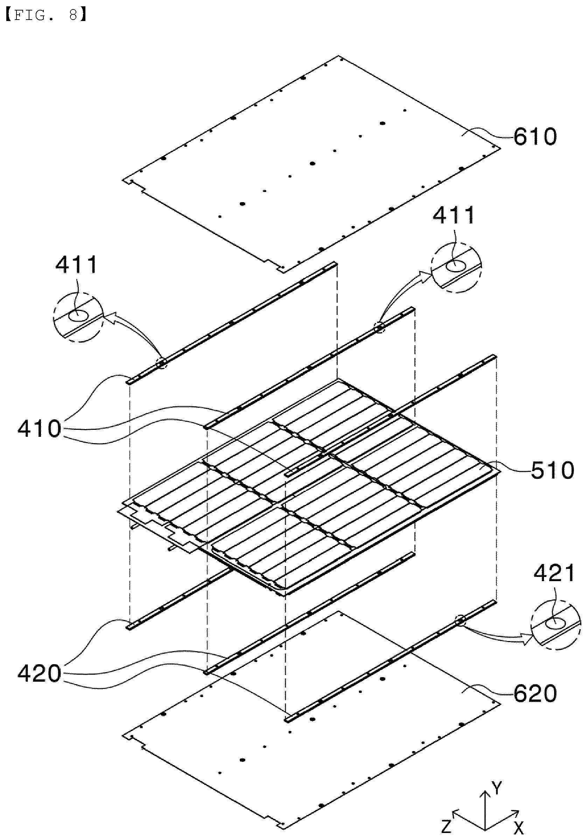

FIG. 7 is a perspective view illustrating a battery cell mounting structure in the battery module according to the preferred embodiment of the present invention, and FIG. 8 is a perspective view illustrating a support frame disposition structure in the battery module according to the preferred embodiment of the present invention.

The plurality of first battery cells 510 according to the present invention is horizontally seated on the protuberances 110 of the heat sink 100, exposed to the outside in a state of being inserted through the first openings 211 of the upper support plate 210, and the upper support plate 210.

A conventional battery module is configured to have a structure in which battery cells are located perpendicular to a heat sink, whereby contact area between the battery cells and the heat sink is small, and therefore cooling performance of the battery module is limited.

In contrast, the battery module 1000 according to the present invention is configured to have a structure in which the first battery cells 510 are located parallel to the heat sink 100 and in which the horizontal side surfaces of the first battery cells 510 contact the protuberances 110 of the heat sink 100, whereby rapid heat transfer is achieved, and therefore heat transfer efficiency is improved.

Of course, it is obvious that the remaining portions of the first battery cells 510, which are not in tight contact with the protuberances 110 of the heat sink 100, are in tight contact with the upper support plate 210.

Meanwhile, a known thermally conductive resin layer may be interposed between each of the protuberances 110 and a corresponding one of the first battery cells 510 in order to fix the protuberance and the first battery cell to each other.

The structure in which the second battery cells 520 and the lower support plate 220 are mounted is identical to the structure in which the first battery cells 510 and the upper support plate 210 are coupled to each other except for only difference in direction, and therefore a detailed description thereof will be omitted.

As previously described, the support frame 400 includes the first support frames 410 and the second support frames 420.

The first support frames 410 are located between the upper support plate 210 and the upper cover plate 610, more specifically at opposite edges and the middle of the upper support plate 210 in the longitudinal direction of the battery module (the X-axis direction). Each of the first support frames is a bar that has a predetermined width, height, and length and that has an approximately quadrangular section. Each of the first support frames 410 is provided with a plurality of first through-holes 411 formed so as to be spaced apart from each other by a predetermined distance such that the first elastic members 2210 and the fastening members 2400 can be inserted therethrough.

The second support frames 420 are identical in construction to the first support frames 410 except that the second support frames are located between the lower support plate 220 and the lower cover plate 620. That is, each of the second support frames 420 is provided with a plurality of second through-holes 421 formed so as to be spaced apart from each other by a predetermined distance such that the fastening members 2400 can be inserted therethrough.

Even though the plurality of battery modules 1000 is fastened to each other in a state of being stacked, the support plate 200 and the cover plate 600 may be maintained spaced apart from each other by a predetermined distance by the first support frames 410 and the second support frames 420, whereby it is possible to prevent the battery cells from being pressed more than necessary and to inhibit local expansion at the time of swelling.

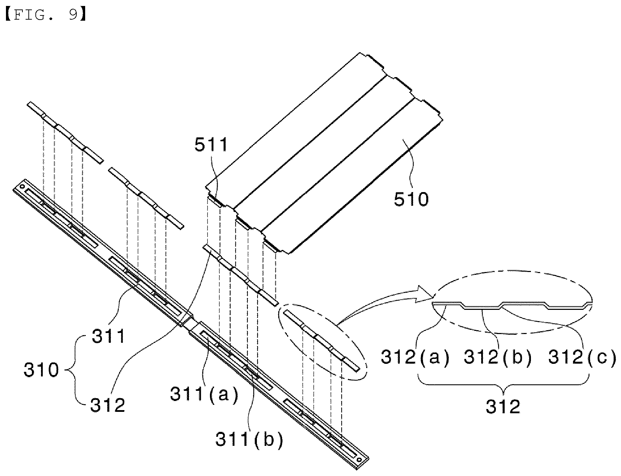

FIG. 9 is a perspective view illustrating a coupling structure between the battery cells and busbars in the battery module according to the preferred embodiment of the present invention.

When describing with further reference to FIG. 7, the busbar assembly 300 includes a first busbar assembly 310 and a second busbar assembly 320, which are identical in construction to each other except for only difference in disposition. Hereinafter, therefore, a description will be given based on the first busbar assembly 310.

The first busbar assembly 310 includes a first busbar frame 311 and busbars 312. The first busbar frame 311 is configured to electrically connect adjacent ones of the busbars 312 to each other while supporting the busbars 312. The first busbar frame 311 is provided with first receiving recesses 311(a) configured to receive the busbars 312 in a seated state and second receiving recesses 311(b) depressed deeper than the first receiving recesses 311(a).

Each of the busbars 312, which is configured to have a concave-convex structure that is bent at a predetermined angle a plurality of times, includes a first horizontal portion 312(a), a second horizontal portion 312(b) located lower than the first horizontal portion 312(a), and a connection portion 312(c) configured to connect the first horizontal portion 312(a) and the second horizontal portion 312(b) to each other, the connection portion being bent at a predetermined angle.

When the busbar 312 having the above construction is seated in the receiving recesses of the first busbar frame 311, the first horizontal portion 312(a) is inserted into the first receiving recess 311(a), and the second horizontal portion 312(b) is inserted into the second receiving recess 311(b), whereby the busbar 312 is securely fastened to the first busbar frame 311.

Meanwhile, an electrode lead 511 of each of the first battery cells 510 is seated on the first horizontal portion 312(a) .

The conventional battery module has no function of cooling the busbar assembly 300 or further needs to have such a cooling function. In the present invention, however, the busbar assembly 300 is located in surface contact on the upper support plate 210 and the lower support plate 220 located respectively at the upper surface and the lower surface of the heat sink 100, whereby it is possible to cool the busbar assembly 300 using only the heat sink 100, which is configured to cool the battery cells, and therefore it is possible to minimize an increase in volume of the battery module.

The present invention may provide a device including a battery pack having at least one of the above-mentioned features, and the device may be an electric vehicle, a hybrid electric vehicle, or a plug-in hybrid electric vehicle.

### (Description of Reference Symbols)

- 1000:: Battery module
- 100:: Heat sink
- 110:: Protuberance
- 120:: Coolant inlet port
- 130:: Coolant outlet port
- 200:: Support plate
- 210:: Upper support plate
- 211:: First opening
- 220:: Lower support plate
- 221:: Second opening
- 300:: Busbar assembly
- 310:: First busbar assembly
- 311:: First busbar frame
- 311(a):: First receiving recess 311(b): Second receiving recess
- 312:: Busbar
- 312(a):: First horizontal portion 312(b): Second horizontal portion
- 312(c):: Connection portion
- 320:: Second busbar assembly
- 400:: Support frame
- 410:: First support frame 411: First through-hole
- 420:: Second support frame 421: Second through-hole
- 500:: Battery cell
- 510:: First battery cell
- 511:: Electrode lead
- 520:: Second battery cell
- 600:: Cover plate
- 610:: Upper cover plate
- 620:: Lower cover plate
- 2000:: Battery pack
- 2100:: Pressing plate
- 2110:: Upper pressing plate
- 2120:: Lower pressing plate
- 2130:: Side plate
- 2200:: Elastic member
- 2210:: First elastic member
- 2220:: Second elastic member
- 2230:: Third elastic member
- 2300:: Pack case
- 2310:: Upper pack cover
- 2320:: Lower pack cover
- 2330:: Side pack cover
- 2400:: Fastening member
- 2500:: Distance retention portion

## Claims

1. A battery pack (2000) comprising:
a plurality of battery modules (1000) stacked in a vertical direction in a horizontal state;
pressing plates (2100) comprising an upper pressing plate (2110) and a lower pressing plate (2120) located outside the plurality of battery modules (1000);
a first (2210) and a second elastic member (2220) configured to connect the upper pressing plate (2110) and the lower pressing plate (2120) to each other with a tensile force; and
a pack case (2300) configured to wrap the pressing plate (2100),
wherein the pack case (2300) comprises an upper pack cover (2310) and a lower pack cover (2320),
**characterized in that** a third elastic member (2230) is provided between the upper pack cover (2310) and the upper pressing plate (2110),
wherein each of the battery modules (1000) comprises:
a heat sink (100) which is a flat plate provided with a flow channel defined therein and having a predetermined area, the heat sink (100) being horizontally located;
a support plate (200) comprising an upper support plate (210) and a lower support plate (220) located respectively at an upper surface and a lower surface of the heat sink (100);
battery cells (500) comprising first battery cells (510) disposed in tight contact with the upper support plate (210) and second battery cells (520) disposed in tight contact with the lower support plate (220); and
cover plates (600) comprising an upper cover plate (610) located above the first battery cells (510) and a lower cover plate (620) located under the second battery cells (520).

2. The battery pack (2000) according to claim 1, wherein the heat sink (100) is provided on the upper surface thereof with protuberances (110) protruding by a predetermined height, and
wherein the upper support plate (210) is provided with first openings (211) configured to receive the protuberances (110).

3. The battery pack (2000) according to claim 2, wherein the first battery cells (510) are located at an upper surface of the protuberances (110).

4. The battery pack (2000) according to claim 1, wherein the heat sink (100) is provided on the lower surface thereof with protuberances (110) protruding by a predetermined height, and
wherein the lower support plate (220) is provided with second openings (221) configured to receive the protuberances (110).

5. The battery pack (2000) according to claim 4, wherein the second battery cells (520) are located at a lower surface of the protuberances (110).

6. The battery pack (2000) according to claim 1, wherein first support frames (410) are located between the upper support plate (210) and the upper cover plate (610) so as to extend along opposite edges and a middle thereof while having a predetermined height and width.

7. The battery pack (2000) according to claim 1, wherein second support frames (420) are located between the lower support plate (220) and the lower cover plate (620) so as to extend along opposite edges and a middle thereof while having a predetermined height and width.

8. The battery pack (2000) according to claim 6 or 7, wherein the first support frame (410) and the second support frame (420) extending along the middle of each of the upper support plate (210) and the upper cover plate (610) or the middle of each of the lower support plate (220) and the lower cover plate (620) are provided respectively with first through-holes (411) and second through-holes (421) configured to allow first elastic members (2210) to be inserted therethrough.

9. The battery pack (2000) according to claim 1, wherein a first busbar assembly (310) is located between the upper support plate (210) and the upper cover plate (610),
wherein the first busbar assembly (310) comprises:
a first busbar frame (311) having a first receiving recess (311(a)) formed therein; and
a busbar (312) seated in the first receiving recess (311(a)), the busbar (312) being configured to have a concave-convex structure that is bent at a predetermined angle a plurality of times.

10. The battery pack (2000) according to claim 1, wherein a second busbar assembly (320) is located between the lower support plate (220) and the lower cover plate (620).

11. A device comprising the battery pack (2000) according to any one of the preceding claims.

## Patentansprüche

1. Batteriepack (2000), umfassend:
eine Mehrzahl von Batteriemodulen (1000), welche in einem horizontalen Zustand in einer vertikalen Richtung gestapelt sind;
Pressplatten (2100), welche eine obere Pressplatte (2110) und eine untere Pressplatte (2120) umfassen, welche außerhalb der Mehrzahl von Batteriemodulen (1000) angeordnet sind;
ein erstes (2210) und ein zweites elastisches Element (2220), welche dazu eingerichtet sind, die obere Pressplatte (2110) und die untere Pressplatte (2120) durch eine Zugkraft miteinander zu verbinden; und
ein Packgehäuse (2300), welches dazu eingerichtet ist, die Pressplatte (2100) zu umhüllen,
wobei das Packgehäuse (2300) eine obere Packabdeckung (2310) und eine untere Packabdeckung (2320) umfasst,
**dadurch gekennzeichnet, dass** ein drittes elastisches Element (2230) zwischen der oberen Packabdeckung (2310) und der oberen Pressplatte (2110) bereitgestellt ist,
wobei jedes der Batteriemodule (1000) umfasst:
eine Wärmefalle (100), welche eine flache Platte ist, welche mit einem darin definierten Strömungskanal bereitgestellt ist und einen vorbestimmten Bereich aufweist, wobei die Wärmefalle (100) horizontal angeordnet ist;
eine Trägerplatte (200), welche eine obere Trägerplatte (210) und eine untere Trägerplatte (220) umfasst, welche jeweils an einer oberen Fläche und einer unteren Fläche der Wärmefalle (100) angeordnet sind;
Batteriezellen (500), welche erste Batteriezellen (510), welche in engem Kontakt mit der oberen Trägerplatte (210) angeordnet sind, und zweite Batteriezellen (520) umfassen, welche in engem Kontakt mit der unteren Trägerplatte (220) angeordnet sind; und
Abdeckplatten (600), welche eine obere Abdeckplatte (610), welche über den ersten Batteriezellen (510) angeordnet ist, und eine untere Abdeckplatte (620) umfassen, welche unter den zweiten Batteriezellen (520) angeordnet ist.

2. Batteriepack (2000) nach Anspruch 1, wobei die Wärmefalle (100) an der oberen Fläche davon mit Ausstülpungen (110) bereitgestellt ist, welche um eine vorbestimmte Höhe hervorstehen, und
wobei die obere Trägerplatte (210) mit ersten Öffnungen (211) bereitgestellt ist, welche dazu eingerichtet sind, die Ausstülpungen (110) aufzunehmen.

3. Batteriepack (2000) nach Anspruch 2, wobei die ersten Batteriezellen (510) an einer oberen Fläche der Ausstülpungen (110) angeordnet sind.

4. Batteriepack (2000) nach Anspruch 1, wobei die Wärmefalle (100) an der unteren Fläche davon mit Ausstülpungen (110) bereitgestellt ist, welche um eine vorbestimmte Höhe hervorstehen, und
wobei die untere Trägerplatte (220) mit zweiten Öffnungen (221) bereitgestellt ist, welche dazu eingerichtet sind, die Ausstülpungen (110) aufzunehmen.

5. Batteriepack (2000) nach Anspruch 4, wobei die zweiten Batteriezellen (520) an einer unteren Fläche der Ausstülpungen (110) angeordnet sind.

6. Batteriepack (2000) nach Anspruch 1, wobei erste Trägerrahmen (410) zwischen der oberen Trägerplatte (210) und der oberen Abdeckplatte (610) angeordnet sind, um sich entlang entgegengesetzter Ränder und einer Mitte davon zu erstrecken, während sie eine vorbestimmte Höhe und Breite aufweisen.

7. Batteriepack (2000) nach Anspruch 1, wobei zweite Trägerrahmen (420) zwischen der unteren Trägerplatte (220) und der unteren Abdeckplatte (620) angeordnet sind, um sich entlang entgegengesetzter Ränder und einer Mitte davon zu erstrecken, während sie eine vorbestimmte Höhe und Breite aufweisen.

8. Batteriepack (2000) nach Anspruch 6 oder 7, wobei der erste Trägerrahmen (410) und der zweite Trägerrahmen (420), welche sich entlang der Mitte jeder aus der oberen Trägerplatte (210) und der oberen Abdeckplatte (610) oder der Mitte jeder aus der unteren Trägerplatte (220) und der unteren Abdeckplatte (620) erstrecken, jeweils mit ersten Durchgangslöchern (411) und zweiten Durchgangslöchern (421) bereitgestellt sind, welche dazu eingerichtet sind, es den ersten elastischen Elementen (2210) zu ermöglichen, dadurch eingeführt zu werden.

9. Batteriepack (2000) nach Anspruch 1, wobei eine erste Sammelschienenanordnung (310) zwischen der oberen Trägerplatte (210) und der oberen Abdeckplatte (610) angeordnet ist,
wobei die erste Sammelschienenanordnung (310) umfasst:
einen ersten Sammelschienenrahmen (311), welcher eine erste Aufnahmevertiefung (311(a)) darin gebildet aufweist; und
eine Sammelschiene (312), welche in der ersten Aufnahmevertiefung (311(a)) sitzt, wobei die Sammelschiene (312) dazu eingerichtet ist, eine konkav-konvexe Struktur aufzuweisen, welche für eine Mehrzahl von Malen um einen vorbestimmten Winkel gebogen ist.

10. Batteriepack (2000) nach Anspruch 1, wobei eine zweite Sammelschienenanordnung (320) zwischen der unteren Trägerplatte (220) und der unteren Abdeckplatte (620) angeordnet ist.

11. Vorrichtung, umfassend den Batteriepack (2000) nach einem der vorhergehenden Ansprüche.

## Revendications

1. Bloc-batterie (2000) comprenant :
une pluralité de modules de batterie (1000) empilés dans une direction verticale dans un état horizontal ;
des plaques de pression (2100) comprenant une plaque de pression supérieure (2110) et une plaque de pression inférieure (2120) situées à l'extérieur de la pluralité de modules de batterie (1000) ;
un premier (2210) et un deuxième organe élastique (2220) configurés pour relier entre elles la plaque de pression supérieure (2110) et la plaque de pression inférieure (2120) par une force de traction ; et
un boîtier de bloc (2300) configuré pour envelopper la plaque de pression (2100),
dans lequel le boîtier de bloc (2300) comprend un couvercle de bloc supérieur (2310) et un couvercle de bloc inférieur (2320),
**caractérisé en ce qu'**un troisième organe élastique (2230) est disposé entre le couvercle de bloc supérieur (2310) et la plaque de pression supérieure (2110),
dans lequel chacun des modules de batterie (1000) comprend :
un dissipateur thermique (100) qui est une plaque plate dotée d'un canal d'écoulement défini en son sein et ayant une superficie prédéterminée, le dissipateur thermique (100) étant positionné horizontalement ;
une plaque de support (200) comprenant une plaque de support supérieure (210) et une plaque de support inférieure (220) situées respectivement au niveau d'une surface supérieure et d'une surface inférieure du dissipateur thermique (100) ;
des cellules de batterie (500) comprenant des premières cellules de batterie (510) disposées en contact étroit avec la plaque de support supérieure (210) et des deuxièmes cellules de batterie (520) disposées en contact étroit avec la plaque de support inférieure (220) ; et
des plaques de recouvrement (600) comprenant une plaque de recouvrement supérieure (610) située au-dessus des premières cellules de batterie (510) et une plaque de recouvrement inférieure (620) située au-dessous des deuxièmes cellules de batterie (520).

2. Bloc-batterie (2000) selon la revendication 1, dans lequel le dissipateur thermique (100) est doté, sur sa surface supérieure, de protubérances (110) faisant saillie d'une hauteur prédéterminée, et
dans lequel la plaque de support supérieure (210) est dotée de premières ouvertures (211) configurées pour recevoir les protubérances (110).

3. Bloc-batterie (2000) selon la revendication 2, dans lequel les premières cellules de batterie (510) sont situées au niveau d'une surface supérieure des protubérances (110).

4. Bloc-batterie (2000) selon la revendication 1, dans lequel le dissipateur thermique (100) est doté, sur sa surface inférieure, de protubérances (110) faisant saillie d'une hauteur prédéterminée, et
dans lequel la plaque de support inférieure (220) est dotée de deuxièmes ouvertures (221) configurées pour recevoir les protubérances (110).

5. Bloc-batterie (2000) selon la revendication 4, dans lequel les deuxièmes cellules de batterie (520) sont situées au niveau d'une surface inférieure des protubérances (110).

6. Bloc-batterie (2000) selon la revendication 1, dans lequel des premiers châssis de support (410) sont situés entre la plaque de support supérieure (210) et la plaque de recouvrement supérieure (610) de façon à s'étendre le long de bords opposés et d'un milieu de celles-ci tout en ayant une hauteur et une largeur prédéterminées.

7. Bloc-batterie (2000) selon la revendication 1, dans lequel des deuxièmes châssis de support (420) sont situés entre la plaque de support inférieure (220) et la plaque de recouvrement inférieure (620) de façon à s'étendre le long de bords opposés et d'un milieu de celles-ci tout en ayant une hauteur et une largeur prédéterminées.

8. Bloc-batterie (2000) selon la revendication 6 ou 7, dans lequel le premier châssis de support (410) et le deuxième châssis de support (420) s'étendant le long du milieu de chacune de la plaque de support supérieure (210) et de la plaque de recouvrement supérieure (610) ou du milieu de chacune de la plaque de support inférieure (220) et de la plaque de recouvrement inférieure (620) sont respectivement dotés de premiers trous traversants (411) et de deuxièmes trous traversants (421) configurés pour permettre l'insertion de premiers organes élastiques (2210) à travers ceux-ci.

9. Bloc-batterie (2000) selon la revendication 1, dans lequel un premier ensemble barre omnibus (310) est situé entre la plaque de support supérieure (210) et la plaque de recouvrement supérieure (610), et
dans lequel le premier ensemble barre omnibus (310) comprend :
un premier châssis de barre omnibus (311) ayant un premier évidement de réception (311 (a)) formé dans celui-ci ; et
une barre omnibus (312) installée dans le premier évidement de réception (311 (a)), la barre omnibus (312) étant configurée pour avoir une structure concave-convexe qui est pliée à un angle prédéterminé une pluralité de fois.

10. Bloc-batterie (2000) selon la revendication 1, dans lequel un deuxième ensemble barre omnibus (320) est situé entre la plaque de support inférieure (220) et la plaque de recouvrement inférieure (620).

11. Dispositif comprenant le bloc-batterie (2000) selon l'une quelconque des revendications précédentes.
